# EUROPEAN PATENT APPLICATION

(11) **EP 4 626 070 A1**
(43) Date of publication of application: **01.10.2025**
(21) Application number: 23910525.7
(22) Date of filing: 25.12.2023
(51) Int. Cl.: H04W 28/02

(54) **COMMUNICATION METHOD, COMMUNICATION APPARATUS, AND COMMUNICATION SYSTEM**

(30) Priority: 29.12.2022 CN 202211711294
(71) Applicant: Huawei Technologies Co., Ltd., Shenzhen, Guangdong 518129 (CN)
(72) Inventor: CHEN, Weichao, Shenzhen, Guangdong 518129 (CN); QIN, Yi, Shenzhen, Guangdong 518129 (CN); CHEN, Erkai, Shenzhen, Guangdong 518129 (CN); CAO, Youlong, Shenzhen, Guangdong 518129 (CN); FU, Yu, Shenzhen, Guangdong 518129 (CN)
(74) Representative: Goddar, Heinz J.
(86) International application number: PCT/CN2023/141651
(87) International publication number: WO 2024/140600

(57) **Abstract**

A communication method, a communication apparatus, and a communication system are provided. The communication method includes: A terminal device sends first information. Correspondingly, a network device receives the first information, where the first information includes service information. The network device determines one or more buffer status report BSR formats based on the first information, where a quantity of bits occupied by delay information in the BSR formats is N, a quantity of bits indicating a data amount of buffered data in the BSR format is M, the delay information is delay information of the buffered data, and both N and M are positive integers. The network device sends first indication information. Correspondingly, the terminal device receives the first indication information, where the first indication information indicates the one or more BSR formats. According to embodiments of this application, delay-aware scheduling can be implemented, so that a delay requirement of the buffered data can be met.

## Description

This application claims priority to Chinese Patent Application No. 202211711294.X, filed with the China National Intellectual Property Administration on December 29, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

In a 5th generation (5th generation, 5G) mobile communication technology network, dynamic scheduling means that a scheduler uses control information in each slot to indicate a terminal device to send data. Generally, when the terminal device needs to transmit data, the terminal device may send a scheduling request (scheduling request, SR) to a network device, to request an uplink grant from the network device. After receiving the SR, the network device may send uplink grant information to the terminal device to schedule the terminal device. Then, the terminal device sends the data and a buffer status report (buffer status report, BSR) based on scheduling of the network device. The BSR indicates, to the network device, a data amount of buffered data of the terminal device, in other words, the BSR indicates a data amount of data that further needs to be sent by the terminal device. Then, the network device schedules the terminal device based on the BSR.

In the foregoing dynamic scheduling process, when the terminal device needs to send buffered data, the terminal device needs to first report an SR and a BSR to the network device, and then the network device performs resource scheduling based on the BSR. Consequently, a delay requirement of the data cannot be met.

### SUMMARY

Embodiments of this application disclose a communication method, a communication apparatus, and a communication apparatus, to implement delay-aware scheduling, so that a delay requirement of buffered data can be met.

According to a first aspect, an embodiment of this application provides a communication method. The method may be performed by a network device, or may be performed by a component (for example, a chip or a circuit) of the network device, or may be implemented by a logical node, a logical module, or software that can implement all or some functions of the network device. This is not limited herein. The method includes:
receiving first information, where the first information includes service information; determining one or more buffer status report BSR formats based on the first information, where a quantity of bits occupied by delay information in the BSR format is N, a quantity of bits indicating a data amount of buffered data in the BSR format is M, the delay information is delay information of the buffered data, and both N and M are positive integers; and sending first indication information, where the first indication information indicates the one or more BSR formats.

In this embodiment of this application, the network device may configure a BSR format with delay information for a terminal device based on the service information of the terminal device, so that a BSR reported by the terminal device carries the delay information of the buffered data, the network device can implement delay-aware scheduling based on the delay information of the buffered data, and a delay requirement of the buffered data can be met.

In a possible implementation, the delay information includes a delay of a first moment relative to a second moment, the first moment is a moment at which the buffered data arrives at any one of the following: a medium access control (medium access control, MAC) layer, a service data adaptation protocol (service data adaptation protocol, SDAP) layer, a packet data convergence protocol (packet data convergence protocol, PDCP) layer, and a radio link control (radio link control, RLC) layer, and the second moment is a start moment of a slot in which a BSR in the BSR format is located.

In this embodiment of this application, a delay of the buffered data may include a delay between the moment at which the buffered data arrives at the MAC layer, the SDAP layer, the PDCP layer, or the RLC layer, and the start moment of the slot in which the BSR is located. The terminal device may report the delay of the buffered data by using the BSR in the BSR format, so that the network device can implement delay-aware scheduling based on the delay of the buffered data, and a delay requirement of the buffered data can be met.

In a possible implementation, the one or more BSR formats include a first format and/or a second format, in the first format, N is less than M, and in the second format, N is greater than M.

In this embodiment of this application, in the first format, N is less than M, to be specific, in the first format, the quantity of bits occupied by the delay information is less than the quantity of bits indicating the data amount of the buffered data. Therefore, quantization precision of the buffered data in the first format is higher. In the second format, N is greater than M, to be specific, in the second format, the quantity of bits occupied by the delay information is greater than the quantity of bits indicating the data amount of the buffered data. Therefore, quantization precision of the delay information in the second format is higher. The network device may determine the first format and the second format based on the first information, so that the first format or the second format matches the service information of the terminal device, and the terminal device can report the BSR more properly based on the first format and the second format.

In a possible implementation, the one or more BSR formats include the first format and the second format, and the method further includes:
receiving a BSR, where a format of the BSR is determined based on the first indication information, the data amount of the buffered data, or the delay information.

In this embodiment of this application, the format of the BSR may be determined based on the first indication information and the data amount of the buffered data, or the BSR is determined based on the first indication information and the delay information. The network device may configure the first format and the second format for the terminal device by using the first indication information. In a service process, the terminal device may select one BSR format from the first format and the second format based on a data amount or delay information of buffered data to report a BSR. The network device may configure a plurality of BSR formats, for example, the first format and the second format, for the terminal device by using the first indication information, so that the terminal device can select an appropriate BSR format from the plurality of BSR formats to report the BSR in the service process. In this way, the terminal device can report the BSR more properly.

In a possible implementation, when the data amount of the buffered data is greater than a first threshold, the format of the BSR is the second format; when the data amount of the buffered data is less than or equal to a first threshold, the format of the BSR is the first format; when the delay indicated by the delay information is greater than a second threshold, the format of the BSR is the second format; or when the delay indicated by the delay information is less than or equal to a second threshold, the format of the BSR is the first format.

In this embodiment of this application, the first threshold and the second threshold may be configured by the network device or specified in a protocol. When the data amount of the buffered data is large, for example, the data amount of the buffered data is greater than the first threshold, longer time is required for the terminal device to transmit the buffered data. To avoid that the delay of the buffered data exceeds a packet delay budget (packet delay budget, PDB), a BSR in the second format may be used to report the delay of the buffered data in a refined manner. Alternatively, when the delay of the buffered data is large, for example, the delay of the buffered data is greater than the second threshold, to avoid that the delay of the buffered data exceeds a PDB, a BSR in the second format may be used to report the delay of the buffered data in a refined manner. Alternatively, when the data amount of the buffered data is less than or equal to the first threshold, or the delay of the buffered data is less than or equal to the second threshold, the terminal device may report the data amount of the buffered data in a refined manner by using a BSR in the first format, so that the network device can perform refined scheduling based on the BSR.

In a possible implementation, the first indication information indicates N or M in one BSR format, and determining the one or more buffer status report BSR formats based on the first information includes:
determining N or M based on the first information.

In this embodiment of this application, the network device may determine, based on the first information, a quantity of bits occupied by delay information and a quantity of bits indicating a data amount of buffered data in one BSR format, so that the BSR format can match a service of the terminal device. In this way, the terminal device can report the BSR more properly.

In a possible implementation, a sum of N and M is a first value.

In this embodiment of this application, the first value may be 5 or 8. To be specific, in the one or more BSR formats, a quantity of bits of the first value indicates the delay information and the data amount of the buffered data, so that a quantity of bits required for reporting the BSR can be effectively reduced.

In a possible implementation, the delay information in the BSR format indicates at least one delay, and one of the at least one delay indicates a delay of buffered data in one logical channel (logical channel, LCH).

In this embodiment of this application, the delay information may be carried by a delay field, the BSR format may include at least one delay field, and each delay field indicates delay information of the buffered data in one logical channel, so that the terminal device can report delay information of buffered data in at least one logical channel by using one BSR.

In a possible implementation, a quantity of bits occupied by the delay is 8.

In a possible implementation, a unit of the delay includes any one of the following: a slot, an uplink slot, and a millisecond.

In a possible implementation, the service information includes at least one of the following: a bit rate, a frame rate, a frame size average value, and a burst length of service data.

According to a second aspect, an embodiment of this application provides a communication method. The method may be performed by a terminal device, or may be performed by a component (for example, a chip or a circuit) of the terminal device. This is not limited herein. The method includes:
sending first information, where the first information includes service information; and receiving first indication information, where the first indication information indicates one or more buffer status report BSR formats, the BSR format is determined based on the first information, a quantity of bits occupied by delay information in the BSR format is N, a quantity of bits indicating a data amount of buffered data in the BSR format is M, the delay information is delay information of the buffered data, and both N and M are positive integers.

In this embodiment of this application, the terminal device may report the service information of the terminal device to a network device, so that the network device can configure a BSR format with delay information based on the service information, and a BSR reported by the terminal device carries the delay information of the buffered data. In this way, the network device can implement delay-aware scheduling based on the delay information of the buffered data, thereby ensuring that a delay requirement of the buffered data can be met.

In a possible implementation, the delay information includes a delay of a first moment relative to a second moment, the first moment is a moment at which the buffered data arrives at any one of the following: a medium access control MAC layer, a service data adaptation protocol SDAP layer, a packet data convergence protocol PDCP layer, and a radio link control RLC layer, and the second moment is a start moment of a slot in which a BSR in the BSR format is located.

In this embodiment of this application, a delay of the buffered data may include a delay between the moment at which the buffered data arrives at the MAC layer, the SDAP layer, the PDCP layer, or the RLC layer, and the start moment of the slot in which the BSR is located. The terminal device may report the delay of the buffered data by using the BSR in the BSR format, so that the network device can implement delay-aware scheduling based on the delay of the buffered data, and a delay requirement of the buffered data can be met.

In a possible implementation, the one or more BSR formats include a first format and/or a second format, in the first format, N is less than M, and in the second format, N is greater than M.

In this embodiment of this application, in the first format, N is less than M, to be specific, in the first format, the quantity of bits occupied by the delay information is less than the quantity of bits indicating the data amount of the buffered data. Therefore, quantization precision of the buffered data in the first format is higher. In the second format, N is greater than M, to be specific, in the second format, the quantity of bits occupied by the delay information is greater than the quantity of bits indicating the data amount of the buffered data. Therefore, quantization precision of the delay information in the second format is higher. The network device may determine the first format and the second format based on the first information, so that the first format or the second format matches the service information of the terminal device, and the terminal device can report the BSR more properly based on the first format and the second format.

In a possible implementation, the one or more BSR formats include the first format and the second format, and the method further includes:
sending a BSR, where a format of the BSR is determined based on the first indication information, the data amount of the buffered data, or the delay information.

In this embodiment of this application, the format of the BSR may be determined based on the first indication information and the data amount of the buffered data, or the format of the BSR is determined based on the first indication information and the delay information. The network device may configure the first format and the second format for the terminal device by using the first indication information. In a service process, the terminal device may select one BSR format from the first format and the second format based on a data amount or delay information of buffered data to report a BSR. In this application, the network device may configure a plurality of BSR formats, for example, the first format and the second format, for the terminal device by using the first indication information, so that the terminal device can select an appropriate BSR format from the plurality of BSR formats to report the BSR in the service process. In this way, the terminal device can report the BSR more properly.

In a possible implementation, when the data amount of the buffered data is greater than a first threshold, the format of the BSR is the second format; when the data amount of the buffered data is less than or equal to a first threshold, the format of the BSR is the first format; when the delay indicated by the delay information is greater than a second threshold, the format of the BSR is the second format; or when the delay indicated by the delay information is less than or equal to a second threshold, the format of the BSR is the first format.

In this embodiment of this application, the first threshold and the second threshold may be configured by the network device or specified in a protocol. When the data amount of the buffered data is large, for example, the data amount of the buffered data is greater than the first threshold, longer time is required for the terminal device to transmit the buffered data. To avoid that the delay of the buffered data exceeds a PDB, a BSR in the second format may be used to report the delay of the buffered data in a refined manner. Alternatively, when the delay of the buffered data is large, for example, the delay of the buffered data is greater than the second threshold, to avoid that the delay of the buffered data exceeds a PDB, a BSR in the second format may be used to report the delay of the buffered data in a refined manner. Alternatively, when the data amount of the buffered data is less than or equal to the first threshold, or the delay of the buffered data is less than or equal to the second threshold, the terminal device may report the data amount of the buffered data in a refined manner by using a BSR in the first format, so that the network device can perform refined scheduling based on the BSR.

In a possible implementation, the first indication information indicates N or M in one BSR format.

In this embodiment of this application, the network device may determine, based on the first information, a quantity of bits occupied by delay information and a quantity of bits indicating a data amount of buffered data in one BSR format, and indicate, by using the first indication information, the bits occupied by the delay information or the quantity of bits indicating the data amount of the buffered data, so that a BSR format used by the terminal device to report a BSR can match a service of the terminal device. In this way, the terminal device can report the BSR more properly.

In a possible implementation, a sum of N and M is a first value.

In this embodiment of this application, the first value may be 5 or 8. To be specific, in the one or more BSR formats, a quantity of bits of the first value indicates the delay information and the data amount of the buffered data, so that a quantity of bits required for reporting the BSR can be reduced.

In a possible implementation, the delay information in the BSR format indicates at least one delay, and one of the at least one delay indicates a delay of buffered data in one logical channel LCH.

In this embodiment of this application, the delay information may be carried by a delay field, the BSR format may include at least one delay field, and each delay field indicates delay information of the buffered data in one logical channel, so that the terminal device can report delay information of buffered data in at least one logical channel by using one BSR.

In a possible implementation, a quantity of bits occupied by the delay is 8.

In a possible implementation, a unit of the delay includes any one of the following: a slot, an uplink slot, and a millisecond.

In a possible implementation, the service information includes at least one of the following: a bit rate, a frame rate, a frame size average value, and a burst length of service data.

According to a third aspect, an embodiment of this application provides a communication apparatus, configured to perform the method in any one of the first aspect or the possible implementations. The communication apparatus includes a unit configured to perform the method in any one of the first aspect or the possible implementations. For example, the communication apparatus may be a network device configured to perform the method in any one of the first aspect or the possible implementations, or a component (for example, a chip or a circuit) of the network device, or a logical node, a logical module, software, or the like that can implement all or some functions of the network device.

According to a fourth aspect, an embodiment of this application provides a communication apparatus, configured to perform the method in any one of the second aspect or the possible implementations. The communication apparatus includes a unit configured to perform the method in any one of the second aspect or the possible implementations. For example, the communication apparatus may be a terminal device configured to perform the method in any one of the second aspect or the possible implementations, or a component (for example, a chip or a circuit) of the terminal device.

According to a fifth aspect, an embodiment of this application provides a communication apparatus. The communication apparatus includes a processor, configured to perform the method in any one of the first aspect or the possible implementations. Alternatively, the processor is configured to execute a program stored in a memory. When the program is executed, the method in any one of the first aspect or the possible implementations is performed. For example, the communication apparatus may be a network device configured to perform the method in any one of the first aspect or the possible implementations, or a component (for example, a chip or a circuit) of the network device, or a logical node, a logical module, software, or the like that can implement all or some functions of the network device.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a sixth aspect, an embodiment of this application provides a communication apparatus. The communication apparatus includes a processor, configured to perform the method in any one of the second aspect or the possible implementations. Alternatively, the processor is configured to execute a program stored in a memory. When the program is executed, the method in any one of the second aspect or the possible implementations is performed. For example, the communication apparatus may be a terminal device configured to perform the method in any one of the second aspect or the possible implementations, or a component (for example, a chip or a circuit) of the terminal device.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a seventh aspect, an embodiment of this application provides a communication apparatus. The communication apparatus includes a logic circuit and an interface. The logic circuit is coupled to the interface. The interface is configured to input first information. The logic circuit is configured to determine one or more BSR formats based on the first information. The interface is further configured to output first indication information.

It may be understood that for descriptions of the first information, the one or more BSR formats, and the first indication information, refer to the method in any one of the first aspect or the possible implementations. Details are not described herein again.

According to an eighth aspect, an embodiment of this application provides a communication apparatus. The communication apparatus includes a logic circuit and an interface. The logic circuit is coupled to the interface. The interface is configured to output first information and input first indication information.

It may be understood that, for descriptions of the first information and the first indication information, refer to the method in any one of the second aspect or the possible implementations. Details are not described herein again.

According to a ninth aspect, an embodiment of this application provides a computer-readable storage medium. The computer-readable storage medium is configured to store a computer program. When the computer program runs on a computer, the method in the first aspect or any one of the possible implementations of the first aspect is performed, or the method in the second aspect or any one of the possible implementations of the second aspect is performed.

According to a tenth aspect, an embodiment of this application provides a computer program product. The computer program product includes a computer program or computer code. When the computer program product runs on a computer, the method in the first aspect or any one of the possible implementations of the first aspect is performed, or the method in the second aspect or any one of the possible implementations of the second aspect is performed.

According to an eleventh aspect, an embodiment of this application provides a communication system. The communication system includes a network device and a terminal device. The network device is configured to perform the method in the first aspect or any one of the possible implementations of the first aspect. The terminal device is configured to perform the method in the second aspect or any one of the possible implementations of the second aspect.

### BRIEF DESCRIPTION OF DRAWINGS

The following describes the accompanying drawings used in embodiments of this application.
FIG. 1 is a schematic of a 5G network architecture according to an embodiment of this application;
FIG. 2 is a diagram of a structure of a Wi-Fi communication system according to an embodiment of this application;
FIG. 3 is a schematic flowchart of dynamic scheduling according to an embodiment of this application;
FIG. 4 is a diagram of a dynamic scheduling scenario according to an embodiment of this application;
FIG. 5 is a diagram of interaction of a communication method according to an embodiment of this application;
FIG. 6A and FIG. 6B each are a diagram of a structure of a BSR format according to an embodiment of this application;
FIG. 7 is a diagram of interaction of another communication method according to an embodiment of this application;
FIG. 8A to FIG. 8C each are a diagram of a structure of another BSR format according to an embodiment of this application;
FIG. 9 is a diagram of interaction of still another communication method according to an embodiment of this application;
FIG. 10A and FIG. 10B each are a diagram of a structure of still another BSR format according to an embodiment of this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of still another communication apparatus according to an embodiment of this application.

### DESCRIPTION OF EMBODIMENTS

In the specification, the claims, and the accompanying drawings of this application, the terms "first", "second", and the like are merely intended to distinguish between different objects, but do not limit a sequence, a time sequence, a priority, or an importance degree of a plurality of objects. In embodiments of this application, "a plurality of" refers to two or more than two. In addition, the terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, devices, or the like. In addition, unless otherwise stated, the character "/" generally represents an "or" relationship between associated objects.

An "embodiment" mentioned in this specification means that a particular characteristic, structure, or feature described with reference to this embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in this specification may be combined with another embodiment.

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development.

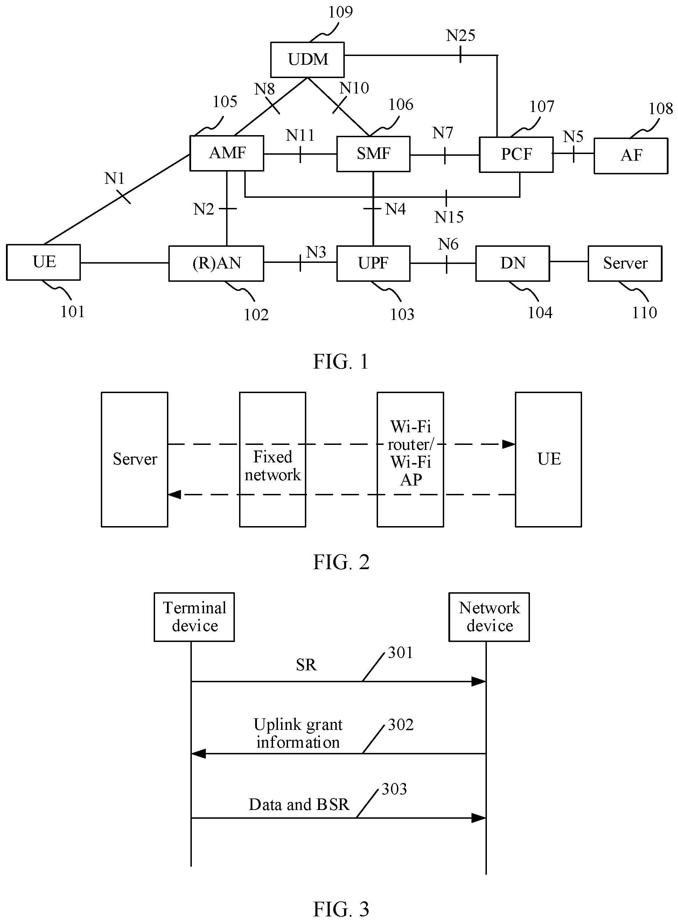

Technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-everything (vehicle-to-everything, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. For example, in FIG. 1 described below, terminal devices may communicate with each other by using the D2D technology, the M2M technology, or the V2X technology.

FIG. 1 is an example of a 5G network architecture. As shown in FIG. 1, the system may be divided into two parts: an access network and a core network (core network, CN). The access network is configured to implement a function related to radio access, and mainly includes an access network (access network, AN) device 102. The access network device includes a radio access network (radio access network, RAN) device and another device (for example, Wi-Fi) for access through an air interface. The core network mainly includes the following several key logical network elements (or referred to as network functions (network functions, NFs)): a user plane function (user plane function, UPF) 103, an access and mobility management function (access and mobility management function, AMF) 105, a session management function (session management function, SMF) 106, a policy control function (policy control function, PCF) 107, and a unified data management function (unified data management, UDM) 109. The system may further include one or more of user equipment (user equipment, UE) 101, a data network (data network, DN) 104, an application function (application function, AF) 108, and a server 110. Interfaces between the network elements are shown in FIG. 1. It should be understood that the network elements may alternatively communicate with each other through a service-oriented interface.

The UE may be a terminal that accesses a communication system and has a wireless transceiver function, or a chip or a chip system that may be disposed in the terminal, or may be referred to as a terminal device. The terminal device may communicate with one or more core networks (core network, CN) by using the AN device. The terminal device may be referred to as an access terminal, a terminal, a subscriber unit, a subscriber station, a mobile station, a remote station, a remote terminal, a mobile device, a user terminal, a wireless network device, a user agent, or a user apparatus. The terminal device may be deployed on land, including an indoor terminal device, an outdoor terminal device, a handheld terminal device, a wearable terminal device, or a vehicle-mounted terminal device; or may be deployed on a water surface, for example, on a ship; or may be deployed in the air, for example, on an airplane, a balloon, or a satellite. The terminal device may be a mobile phone (mobile phone), a tablet computer (Pad), a computer having a wireless transceiver function, a virtual reality (virtual reality, VR) terminal device, an augmented reality (augmented reality, AR) terminal device, a head-mounted display extended reality (extended Reality, XR) glasses, a video player, a holographic projector, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), customer-premises equipment (customer-premises equipment, CPE), or the like. It may be understood that the terminal device may alternatively be a terminal device in a future 6G network, a terminal device in a future evolved PLMN, or the like.

The AN device may be a network device that accesses a communication system and has a wireless transceiver function, or a chip or a chip system that may be disposed in the network device. The AN device is a device that connects the terminal device to a wireless network, and may also be referred to as an access network device, a network device, a RAN node, or the like, and may be specifically a base station. There may be various forms of base stations, for example, a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB), a relay station, an access point, a vehicle-mounted device, or a wearable device in LTE, a next generation NodeB (next generation NodeB, gNB) in a 5G system, a base station in a future evolved public land mobile network (public land mobile network, PLMN), an access network device or a module of the access network device in an open access network ORAN (open RAN, ORAN) system, a base station in a future mobile communication system, an access node in a Wi-Fi system, or the like.

Optionally, in some deployment of the access network device, the access network device may include a central unit (central unit, CU), a distributed unit (distributed unit, DU), and the like. In some other deployment of the access network device, the CU may be further split into a CU-control plane (control plane, CP), a CU-user plane (user plane, UP), and the like. In still some other deployment of the access network device, the access network device may alternatively be an antenna unit (radio unit, RU), or the like. In still some other deployment of the access network device, the access network device may alternatively be in an open radio access network (open radio access network, ORAN) architecture or the like. A specific deployment manner of the access network device is not limited in embodiments of this application. For example, when the access network device is of an ORAN architecture, the access network device in embodiments of this application may be an access network device in an ORAN, a module in the access network device, or the like. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU.

The UDM has functions such as user subscription data management and generation of user authentication information.

The AMF is mainly responsible for functions such as UE registration management, UE connection management, UE reachability management, UE access authorization and access authentication, UE security functionality, UE mobility management, network slice (network slice) selection, and SMF selection. The AMF serves as an anchor of an N1/N2 interface signaling connection, provides the SMF with routing of an N1/N2 interface session management (session management, SM) message, and maintains and manages status information of the UE. The AMF is a mobility management network element in the 5G system.

The SMF is mainly responsible for all control plane functions in session management of the UE. The control plane functions include UPF selection and control, internet protocol (internet protocol, IP) address allocation and management, quality of service (quality of service, QoS) management of a session, obtaining of a policy and charging control (policy and charging control, PCC) policy from the PCF, and the like. The SMF also serves as a termination point of an SM part in a non-access stratum (non-access stratum, NAS) message.

The PCF has functions, for example, providing policy rules to control plane functional entities.

The AF may be an application server, and may belong to an operator or a third party.

The UPF is mainly responsible for handling a user packet, for example, forwarding and charging. The UPF may serve as an anchor of a protocol data unit (protocol data unit, PDU) session (session) connection, namely, a PDU session anchor (PDU session anchor, PSA), and is responsible for data packet filtering, data transmission/forwarding, rate control, charging information generation, QoS handling for user plane, uplink transmission authentication, transmission class verification, downlink packet buffering, downlink data notification triggering, and the like of the UE. The UPF may also serve as a branching point of a multi-homed (multi-homed) PDU session.

The DN is a network that provides a user with a data transmission service, for example, an IP multimedia service (IP Multimedia service, IMS) or an internet. The DN may include an application server (application server, AS). The AS is a software framework, provides an environment in which an application program runs, and is configured to provide the application program with services such as security, data, transaction support, load balancing, and large-scale distributed system management. The UE communicates with the AS to obtain an application packet. It should be noted that the AF is a control plane of the AS.

The server is configured for encoding, decoding, rendering, and the like of a video source, and may perform data interaction with the UE through network transmission. The network transmission includes a DN (for example, a fixed network), a core network (for example, a UPF network element) and an AN in LTE/5G and a next generation air interface 6G.

It may be understood that the method provided in this application may be applied to not only the communication system shown in FIG. 1 but also a communication system shown in FIG. 2.

FIG. 2 is a diagram of a Wi-Fi communication system according to an embodiment of this application. As shown in FIG. 2, the Wi-Fi communication system includes a cloud server, a fixed network, a Wi-Fi router/an AP/a set-top box, and UE. The cloud server transmits XR media data or a common video to the UE (an XR device) by using the fixed network and the Wi-Fi router/AP/set-top box.

Embodiments shown below are applicable to the communication system shown in FIG. 1, or are applicable to the communication system shown in FIG. 2. Details are not described below again.

In a 5G network, dynamic scheduling means that a scheduler uses control information in each slot to indicate the UE to send data. A dynamic scheduling manner may be flexibly and rapidly changed based on a service requirement. A procedure of uplink dynamic scheduling is shown in FIG. 3. The following describes steps in FIG. 3.

301: A terminal device sends a scheduling request (scheduling request, SR). Correspondingly, a network device receives the SR.

For example, when the terminal device needs to send data, the terminal device sends the SR on a physical uplink control channel (physical uplink control channel, PUCCH), to request an uplink grant from the network device. The SR may indicate, by using 1 bit (bit), whether the terminal device has data to be transmitted. For example, when a value of the bit is 1, the SR indicates that the terminal device has data to be transmitted.

For example, the terminal device may send the SR at a granularity of a logical channel (logical channel, LCH). In other words, the terminal device may use one SR to indicate whether there is data to be transmitted in one LCH. Each LCH may have a different SR sending resource (for example, an SR sending periodicity and an offset), in other words, the SR sending resource of each LCH may be separately configured.

For example, if the terminal device receives no uplink grant from the network device within a period of time after sending the SR, the terminal device may resend the SR.

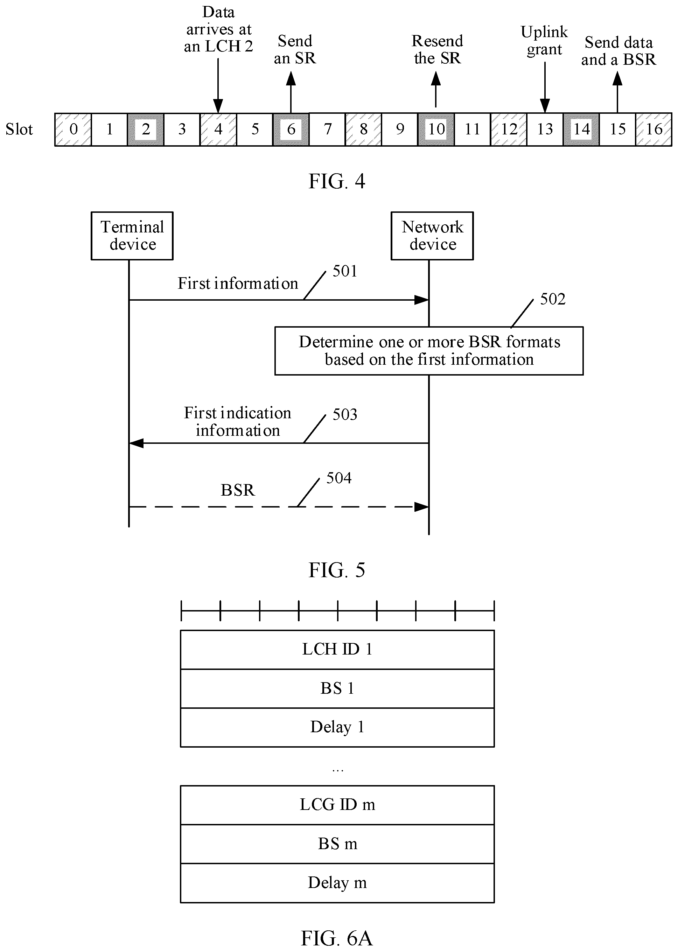

For example, SR sending resource configurations of two LCHs (an LCH 1 and an LCH 2) of the terminal device are shown in FIG. 4. An SR sending resource of the LCH 1 may include a slot 0, a slot 4, a slot 8, a slot 12, and a slot 16 (which are shown by using diagonal boxes in FIG. 4), and an SR sending resource of the LCH 2 may include a slot 2, a slot 6, a slot 10, and a slot 14 (which are shown by using gray boxes in FIG. 4). If there is buffered data that needs to be transmitted in the LCH 2 in the slot 4, the terminal device sends, by using a next SR sending resource of the slot 4 (that is, in the slot 6), an SR corresponding to the LCH 2. If the terminal device receives no uplink grant from the network device after sending the SR, the terminal device reselects an SR and sends the SR in the slot 10.

302: The network device sends uplink grant (uplink grant, UL Grant) information. Correspondingly, the terminal device receives the uplink grant information.

For example, the uplink grant information indicates a transmission resource used by the terminal device to transmit a buffer status report (buffer status report, BSR) and/or a transmission resource used by the terminal device to transmit uplink data. After receiving the SR, the network device responds to the SR, and delivers the uplink grant information through a physical downlink control channel (physical downlink control channel, PDCCH). For example, the network device may include the uplink grant information in a downlink control information (downlink control information, DCI) format (format) 0_0 or a DCI format 0_1.

For example, after determining, based on the SR, that the terminal device has data to be transmitted, the network device may schedule the terminal device based on a small and fixed data amount.

303: The terminal device sends the data and the BSR. Correspondingly, the network device receives the data and the BSR.

For example, the uplink grant information may indicate the terminal device to send the data on a physical uplink shared channel (physical uplink shared channel, PUSCH) resource. After receiving the uplink grant information, the terminal device sends the data and the BSR based on the PUSCH resource indicated by the uplink grant information. The BSR indicates, to the network device, a data amount of buffered data of the terminal device, that is, the BSR indicates a data amount of data that further needs to be sent by the terminal device. The network device may perform resource scheduling on the terminal device based on the data amount of the buffered data indicated by the BSR. For example, when the data amount of the buffered data indicated by the BSR is greater than 0, the network device sends scheduling information to the terminal device through the PDCCH, to indicate the terminal device to transmit the uplink data on the PUSCH resource. For example, as shown in FIG. 4, if the terminal device receives uplink grant information of the network device in a slot 13, and the uplink grant information indicates the terminal device to transmit the data in a slot 15, the terminal device sends the data and the BSR in the slot 15.

In the foregoing dynamic scheduling process, when the terminal device needs to send buffered data, the terminal device needs to first report an SR and a BSR to the network device, and then the network device sends a transmission resource based on the BSR. Consequently, a delay requirement of the data cannot be met. For example, in a time division duplex (time division duplex, TDD) system, the terminal device sends an SR and a BSR in an uplink slot (up slot, U slot), and the network device receives the SR and the BSR in the uplink slot. However, arrival time of buffered data of the terminal device may be earlier than the uplink slot. Consequently, the network device cannot accurately sense accurate arrival time of the data, and a delay requirement of the data cannot be met. For example, in a TDD system in which an uplink-downlink slot configuration is DDDSU, the slot configuration is three downlink-only slots (D), one self-contained slot (S), and one uplink-only slot. If data arrives in the first three slots (downlink slots (DDD)), the terminal device needs to send an SR or a BSR in a fifth slot (uplink slot (U)). Therefore, if the network device uses time at which the SR or the BSR is received or sent as data arrival time, a maximum error may reach five slots (slots). When a subcarrier spacing is 30 kHz, a delay error is 2.5 milliseconds (milliseconds, ms).

For another example, if the network device uses time at which the SR or the BSR is received or sent as data arrival time, and performs scheduling based on a packet delay budget (packet delay budget, PDB) corresponding to a 5G quality of service (quality of service, QoS) identifier (5G QoS Identifier, 5QI), delay (delay) time of the data may exceed the PDB. Consequently, a delay requirement of the data cannot be met. If the network device uses a previous uplink slot as data arrival time, one scheduling opportunity is missing for the terminal device. This reduces an amount of data correctly received by the terminal device within a required delay. Consequently, the terminal device may not meet a threshold condition of the amount of the correctly received data. As a result, a quantity of terminal devices that meet the threshold condition of the amount of the correctly received data in a cell is reduced, and user capacity performance of the cell is lost.

In view of this, embodiments of this application provide a communication method, a communication apparatus, and a communication system, to implement delay-aware scheduling, so that a delay requirement of buffered data can be met. The method provided in embodiments of this application may be applied to the communication system shown in FIG. 1 or FIG. 2. Alternatively, the method may be applied to a terminal device and a network device. The terminal device may be the terminal device described above. The network device may be the network device described above.

It may be understood that in an interaction diagram in this application, an example in which the network device and the terminal device are execution bodies of interaction illustration is used to illustrate the method. However, the execution bodies of the interaction illustration are not limited in this application. For example, the network device in the interaction diagram may alternatively be a chip, a chip system, or a processor that supports the network device in implementing the method, or may be a logical node, a logical module, or software that can implement all or some functions of the network device. The terminal device in the interaction diagram may alternatively be a chip, a chip system, or a processor that supports the terminal in implementing the method.

In embodiments of this application, "send information to ... (terminal)" may be understood as that a destination end of the information is the terminal, and may include directly or indirectly sending information to the terminal; and "receive information from ... (terminal)" may be understood as that a source end of the information is the terminal, and may include directly or indirectly receiving information from the terminal. Necessary processing may be performed on the information between the source end at which the information is sent and the destination end to which the information is sent. For example, one or more of coding, modulation, power matching, and resource mapping may be performed on the information at the source end at which the information is sent. For another example, one or more of resource demapping, demodulation, and decoding may be performed on the information at the destination end at which the information is received. Similar descriptions in this application may be understood similarly. Details are not described herein again.

FIG. 5 is a diagram of interaction of a communication method according to an embodiment of this application. As shown in FIG. 5, the method includes the following steps.

501: A terminal device sends first information. Correspondingly, a network device receives the first information, where the first information includes service information.

For example, the terminal device may send the first information to the network device by using user assistance information (UE assistance information, UAI) signaling. The service information may be rate-related information of service data of the terminal device. For example, the service information may include a bit rate, a frame rate, a frame size average value, a burst length (burst length), and the like of the service data. In an XR service, the service data may include video data, image data, and the like.

502: The network device determines one or more BSR formats based on the first information, where a quantity of bits occupied by delay information in the BSR format is N, a quantity of bits indicating a data amount of buffered data in the BSR format is M, the delay information is delay information of the buffered data, and both N and M are positive integers.

For example, the delay information of the buffered data may include a waiting delay of the buffered data. For example, the delay information of the buffered data may include a processing delay and a waiting delay of the buffered data from a higher layer to a lower layer of a protocol stack.

For example, the delay information of the buffered data may include a delay of a first moment relative to a second moment, the first moment is a moment at which the buffered data arrives at any one of the following: a medium access control (medium access control, MAC) layer, a service data adaptation protocol (service data adaptation protocol, SDAP) layer, a packet data convergence protocol (packet data convergence protocol, PDCP) layer, and a radio link control (radio link control, RLC) layer, and the second moment is a start moment of a slot in which a BSR in the BSR format is located. Alternatively, the second moment may be an end moment of a slot in which a BSR in the BSR format is located, or any moment in the slot in which the BSR is located.

For example, a unit of the delay of the first moment relative to the second moment may be any one of a slot, an uplink slot, and a millisecond. In other words, the delay information indicates a quantity of slots or uplink slots or milliseconds that elapse from time at which the buffered data arrives at the MAC layer, the SDAP layer, the PDCP layer, or the RLC layer to the slot in which the BSR is located.

For example, the BSR format includes the delay information, and may also be referred to as a BSR format with delay information (BSR-with-delay). The BSR in the BSR format with delay information is used to report the data amount of the buffered data of the terminal device and the delay information of the buffered data. In the BSR format, the quantity of bits occupied by the delay information is N, and the quantity of bits indicating the data amount of the buffered data is M. It may be understood that N and M may be described for one of the one or more BSR formats. When the one or more BSR formats include a plurality of BSR formats, N or M in different BSR formats may be different.

For example, the network device may configure one or more BSR formats with delay information for the terminal device based on the service information of the terminal device. The network device determines, based on the service information of the terminal device, the quantity (namely, N) of bits occupied by the delay information or the quantity (namely, M) of bits indicating the data amount of the buffered data in the one or more BSR formats.

For example, the BSR format may include a delay (delay) field, and the delay field is used to carry the delay information of the buffered data. The BSR format includes an LCH identifier (Identifier, ID) field, a buffer size (buffer size, BS) field, and the delay field. In the BSR format, the delay field is adjacent to the BS field or the LCH ID field. The LCH ID field indicates an identifier of an LCH, the BS field indicates a data amount of buffered data in the LCH, and the delay field indicates delay information of the buffered data in the LCH. The network device determines the quantity of bits occupied by the delay information in the one or more BSR formats, in other words, the network device determines a quantity of bits occupied by the delay field in the one or more BSR formats. The network device determines the quantity of bits indicating the data amount of the buffered data in the one or more BSR formats, in other words, the network device determines a quantity of bits occupied by the BS field in the one or more BSR formats.

In a possible implementation, the delay information in the BSR format may indicate at least one delay, and one of the at least one delay indicates a delay of buffered data in one LCH. For example, the BSR format includes at least one delay field, and one of the at least one delay field indicates the delay of the buffered data in one LCH. For example, one delay field may occupy 8 bits. The BSR in the BSR format may be used to report a data amount of buffered data in one or more LCHs of the terminal device and delay information of the buffered data in the one or more LCHs. For example, the BSR format may include one or more LCH ID fields, one or more BS fields, and one or more delay fields. Each of the one or more LCH ID fields indicates an identifier of each of the one or more LCHs. Each of the one or more BS fields indicates a data amount of buffered data of each of the one or more LCHs. Each of the one or more delay fields indicates the data amount of the buffered data of each of the one or more LCHs. For example, the BSR format may be shown in FIG. 6A. The BSR may include m LCH ID fields, m BS fields, and m delay fields, which are respectively used to report identifiers of m LCHs, a data amount of buffered data, and delay information of the buffered data. A 1^{st} LCH ID field indicates an identifier of a 1^{st} LCH, a 1^{st} BS field indicates a data amount of buffered data in the 1^{st} LCH, and a 1^{st} delay field indicates delay information of the buffered data in the 1^{st} LCH. An m^{th} LCH ID field indicates an identifier of an m^{th} LCH, an m^{th} BS field indicates a data amount of buffered data in the m^{th} LCH, and an m^{th} delay field indicates delay information of the buffered data in the m^{th} LCH.

In some possible implementations, the delay field may indicate a delay value range of the delay. For example, the network device may quantize a delay value into a plurality of delay value ranges, and each delay value range corresponds to one index. The delay field indicates an index of a delay value range in which the delay of the first moment relative to the second moment is located. The delay value is quantized, and the delay field indicates the delay value range, so that a delay range that can be reported by the BSR is not limited to the quantity of bits occupied by the delay field, and the BSR can report a delay with a larger range.

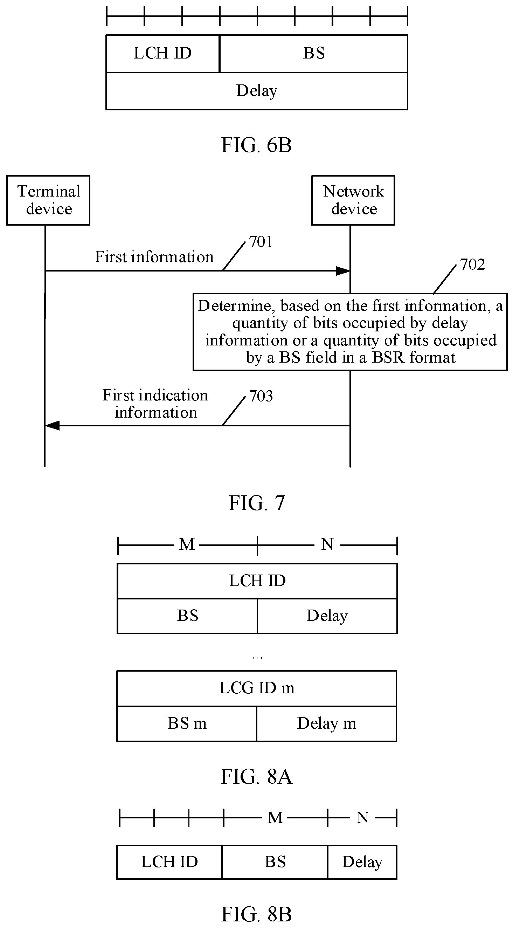

For example, the BSR format may include a long BSR format and a short BSR format. In the short BSR format, one LCH ID field occupies 3 bits, and one BS field occupies 5 bits, as shown in FIG. 6B. A value of the BS field indicates a data amount range of buffered data in an LCH. The MAC layer quantizes a data amount of actual buffered data in the LCH into 32 data amount ranges. The value of the BS field is an index of the data amount range of the LCH, and indicates the buffered data amount range of the LCH. A mapping relationship between an index of a data amount range and the data amount range is shown in Table 1. As shown in Table 1, a BS value (BS value) represents a data amount range, and a unit is a byte. One index corresponds to one data amount range, and the index (index) represents a value of a corresponding BS field. For example, it is assumed that a data amount of buffered data in an LCH is 100 bytes, a data amount range is 74<BS≤102, a corresponding index is 8, and a value of a corresponding BS field is "01000".

**Table 1**

| Index | BS value | Index | BS value | Index | BS value | Index | BS value |
|---|---|---|---|---|---|---|---|
| 0 | 0 | 8 | ≤102 | 16 | ≤1446 | 24 | ≤20516 |
| 1 | ≤10 | 9 | ≤142 | 17 | ≤2014 | 25 | ≤28581 |
| 2 | ≤14 | 10 | ≤198 | 18 | ≤2806 | 26 | ≤39818 |
| 3 | ≤20 | 11 | ≤276 | 19 | ≤3909 | 27 | ≤55474 |
| 4 | ≤28 | 12 | ≤384 | 20 | ≤5446 | 28 | ≤77284 |
| 5 | ≤38 | 13 | ≤535 | 21 | ≤7587 | 29 | ≤107669 |
| 6 | ≤53 | 14 | ≤745 | 22 | ≤10570 | 30 | ≤150000 |
| 7 | ≤74 | 15 | ≤1038 | 23 | ≤14726 | 31 | >150000 |

In the long BSR format, one LCH ID field occupies 8 bits, and one BS field occupies 8 bits, as shown in FIG. 6A. A mapping relationship between an index of a data amount range of buffered data in an LCH and the data amount range of the LCH is shown in Table 2. As shown in Table 2, a BS value represents a buffered data amount range, and a unit is a byte. One index corresponds to one buffered data amount range, and the index represents a value of a corresponding BS field.

**Table 2**

| Index | BS value | Index | BS value | Index | BS value | Index | BS value |
|---|---|---|---|---|---|---|---|
| 0 | 0 | 64 | ≤560 | 128 | ≤31342 | 192 | ≤1754595 |
| 1 | ≤10 | 65 | ≤597 | 129 | ≤33376 | 193 | ≤1868488 |
| 2 | ≤11 | 66 | ≤635 | 130 | ≤35543 | 194 | ≤1989774 |
| 3 | ≤12 | 67 | ≤677 | 131 | ≤37850 | 195 | ≤2118933 |
| 4 | ≤13 | 68 | ≤720 | 132 | ≤40307 | 196 | ≤2256475 |
| 5 | ≤14 | 69 | ≤767 | 133 | ≤42923 | 197 | ≤2402946 |
| 6 | ≤15 | 70 | ≤817 | 134 | ≤45709 | 198 | ≤2558924 |
| 7 | ≤16 | 71 | ≤870 | 135 | ≤48676 | 199 | ≤2725027 |
| 8 | ≤17 | 72 | ≤926 | 136 | ≤51836 | 200 | ≤2901912 |
| 9 | ≤18 | 73 | ≤987 | 137 | ≤55200 | 201 | ≤3090279 |
| 10 | ≤19 | 74 | ≤1051 | 138 | ≤58784 | 202 | ≤3290873 |
| 11 | ≤20 | 75 | ≤1119 | 139 | ≤62599 | 203 | ≤3504487 |
| 12 | ≤22 | 76 | ≤1191 | 140 | ≤66663 | 204 | ≤3731968 |
| 13 | ≤23 | 77 | ≤1269 | 141 | ≤70990 | 205 | ≤3974215 |
| 14 | ≤25 | 78 | ≤1351 | 142 | ≤75598 | 206 | ≤4232186 |
| 15 | ≤26 | 79 | ≤1439 | 143 | ≤80505 | 207 | ≤4506902 |
| 16 | ≤28 | 80 | ≤1532 | 144 | ≤85730 | 208 | ≤4799451 |
| 17 | ≤30 | 81 | ≤1631 | 145 | ≤91295 | 209 | ≤5110989 |
| 18 | ≤32 | 82 | ≤1737 | 146 | ≤97221 | 210 | ≤5442750 |
| 19 | ≤34 | 83 | ≤1850 | 147 | ≤103532 | 211 | ≤5796046 |
| 20 | ≤36 | 84 | ≤1970 | 148 | ≤110252 | 212 | ≤6172275 |
| 21 | ≤38 | 85 | ≤2098 | 149 | ≤117409 | 213 | ≤6572925 |
| 22 | ≤40 | 86 | ≤2234 | 150 | ≤125030 | 214 | ≤6999582 |
| 23 | ≤43 | 87 | ≤2379 | 151 | ≤133146 | 215 | ≤7453933 |
| 24 | ≤46 | 88 | ≤2533 | 152 | ≤141789 | 216 | ≤7937777 |
| 25 | ≤49 | 89 | ≤2698 | 153 | ≤150992 | 217 | ≤8453028 |
| 26 | ≤52 | 90 | ≤2873 | 154 | ≤160793 | 218 | ≤9001725 |
| 27 | ≤55 | 91 | ≤3059 | 155 | ≤171231 | 219 | ≤9586039 |
| 28 | ≤59 | 92 | ≤3258 | 156 | ≤182345 | 220 | ≤10208280 |
| 29 | ≤62 | 93 | ≤3469 | 157 | ≤194182 | 221 | ≤10870913 |
| 30 | ≤66 | 94 | ≤3694 | 158 | ≤206786 | 222 | ≤11576557 |
| 31 | ≤71 | 95 | ≤3934 | 159 | ≤220209 | 223 | ≤12328006 |
| 32 | ≤75 | 96 | ≤4189 | 160 | ≤234503 | 224 | ≤13128233 |
| 33 | ≤80 | 97 | ≤4461 | 161 | ≤249725 | 225 | ≤13980403 |
| 34 | ≤85 | 98 | ≤4751 | 162 | ≤265935 | 226 | ≤14887889 |
| 35 | ≤91 | 99 | ≤5059 | 163 | ≤283197 | 227 | ≤15854280 |
| 36 | ≤97 | 100 | ≤5387 | 164 | ≤301579 | 228 | ≤16883401 |
| 37 | ≤103 | 101 | ≤5737 | 165 | ≤321155 | 229 | ≤17979324 |
| 38 | ≤110 | 102 | ≤6109 | 166 | ≤342002 | 230 | ≤19146385 |
| 39 | ≤117 | 103 | ≤6506 | 167 | ≤364202 | 231 | ≤20389201 |
| 40 | <124 | 104 | ≤6928 | 168 | ≤387842 | 232 | ≤21712690 |
| 41 | ≤132 | 105 | ≤7378 | 169 | ≤413018 | 233 | ≤23122088 |
| 42 | ≤141 | 106 | ≤7857 | 170 | ≤439827 | 234 | ≤24622972 |
| 43 | ≤150 | 107 | ≤8367 | 171 | ≤468377 | 235 | ≤26221280 |
| 44 | ≤160 | 108 | ≤8910 | 172 | ≤498780 | 236 | ≤27923336 |
| 45 | ≤170 | 109 | ≤9488 | 173 | ≤531156 | 237 | ≤29735875 |
| 46 | ≤181 | 110 | ≤10104 | 174 | ≤565634 | 238 | ≤31666069 |
| 47 | ≤193 | 111 | ≤10760 | 175 | ≤602350 | 239 | ≤33721553 |
| 48 | ≤205 | 112 | ≤11458 | 176 | ≤641449 | 240 | ≤35910462 |
| 49 | ≤218 | 113 | ≤12202 | 177 | ≤683087 | 241 | ≤38241455 |
| 50 | ≤233 | 114 | ≤12994 | 178 | ≤727427 | 242 | ≤40723756 |
| 51 | ≤248 | 115 | ≤13838 | 179 | ≤774645 | 243 | ≤43367187 |
| 52 | ≤264 | 116 | ≤14736 | 180 | ≤824928 | 244 | ≤46182206 |
| 53 | ≤281 | 117 | ≤15692 | 181 | ≤878475 | 245 | ≤49179951 |
| 54 | ≤299 | 118 | ≤16711 | 182 | ≤935498 | 246 | ≤52372284 |
| 55 | ≤318 | 119 | ≤17795 | 183 | ≤996222 | 247 | ≤55771835 |
| 56 | ≤339 | 120 | ≤18951 | 184 | ≤1060888 | 248 | ≤59392055 |
| 57 | ≤361 | 121 | ≤20181 | 185 | ≤1129752 | 249 | ≤63247269 |
| 58 | ≤384 | 122 | ≤21491 | 186 | ≤1203085 | 250 | ≤67352729 |
| 59 | ≤409 | 123 | ≤22885 | 187 | ≤1281179 | 251 | ≤71724679 |
| 60 | ≤436 | 124 | ≤24371 | 188 | ≤1364342 | 252 | ≤76380419 |
| 61 | ≤464 | 125 | ≤25953 | 189 | ≤1452903 | 253 | ≤81338368 |
| 62 | ≤494 | 126 | ≤27638 | 190 | ≤1547213 | 254 | >81338368 |
| 63 | ≤526 | 127 | ≤29431 | 191 | ≤1647644 | 255 | Reserved |

For example, Table 1 and Table 2 may be specified in a protocol, or may be configured by the network device.

It should be understood that a quantity of bits occupied by the LCH ID field, the quantity of bits occupied by the BS field, or the quantity of bits occupied by the delay field is merely an example, and should not be understood as a limitation on this application. It should be understood that correspondences between the values of the BS fields and the data amount ranges shown in Table 1 and Table 2 are merely examples, and Table 1 and Table 2 should not be understood as limitations on this application.

In some possible implementations, after determining a quantity of bits occupied by a delay field or a quantity of bits occupied by a BS field in each of the one or more BSR formats, the network device may further quantize the data amount or the delay of the buffered data of the terminal device based on the service information of the terminal device. For example, the network device may determine a value range of the data amount of the buffered data of the terminal device based on the service information, and quantize the data amount of the buffered data based on the value range and the quantity of bits occupied by the BS field, so that the quantity of bits occupied by the BS field corresponds to the value range of the data amount of the buffered data of the terminal device. For example, the network device may perform uniform quantization or non-uniform quantization on the data amount of the buffered data, to obtain S1 data amount ranges. S1 satisfies that S1 = 2^{M}, where M is the quantity of bits occupied by the BS field.

For another example, the network device may determine an allowed delay range of the buffered data of the terminal device based on the service information, and quantize the delay based on the allowed delay range of the buffered data and the quantity of bits occupied by the delay field, so that the quantity of bits occupied by the delay field corresponds to the allowed delay range of the buffered data. For example, the network device may perform uniform quantization or non-uniform quantization on the delay value, to obtain S2 delay value ranges. S2 satisfies that S2 = 2^{N}, where N is the quantity of bits occupied by the delay field.

In this embodiment of this application, the BSR may be reported at a granularity of an LCH, or may be reported at a granularity of a logical channel group (logical channel group, LCG). In other words, the LCH may be replaced with the LCG, and the LCH ID field may be replaced with an LCG ID field. For example, the BSR format includes the LCG ID field, the BS field, and the delay field. The LCG ID field indicates an identifier of the LCG, the BS field indicates a data amount of buffered data in the LCG, and the delay field indicates delay information of the buffered data in the LCG. For ease of description, the following describes embodiments of this application by using an example in which the BSR is reported at the granularity of the LCH.

503: The network device sends first indication information. Correspondingly, the terminal device receives the first indication information, where the first indication information indicates the one or more BSR formats.

For example, the network device may send the first indication information to the terminal device by using RRC signaling. For example, the first indication information may be carried in BSR configuration (BSR-config) signaling. In other words, the network device may configure the one or more BSR formats by using the BSR-config signaling.

In a possible implementation, the network device may further indicate, to the terminal device by using second indication information, whether to use the BSR format with delay information to report the BSR.

For example, after configuring the one or more BSR formats with delay information for the terminal device by using the first indication information, the network device indicates, to the terminal device by using the second indication information, whether to use the BSR formats with delay information. For example, the second indication information may be carried by using RRC signaling. For example, the second indication information may include 1 bit, and a value of the bit indicates, to the terminal device, whether to use the BSR format with delay information.

For example, the second indication information and the first indication information may be carried in same BSR configuration signaling. In other words, when configuring the BSR format with delay information for the terminal device by using the first indication information, the network device may further indicate, to the terminal device by using the second indication information, whether to use the BSR format with delay information to report the BSR.

For example, the network device may determine, based on the service information of the terminal device, whether the terminal device needs to report the delay information of the buffered data when reporting the BSR. The network device may determine a service delay requirement of the terminal device based on the service information. When the service delay requirement of the terminal device is high, the network device may indicate, by using the second indication information, the terminal device to use the BSR format with delay information to report the BSR. When the service delay requirement of the terminal device is not high, the network device may indicate, by using the second indication information, the terminal device not to use the BSR format with delay information to report the BSR.

In a possible implementation, the second indication information may indicate whether the BSR format with delay information is used in each of a plurality of LCHs of the terminal device, in other words, the second indication information may indicate whether the BSR in the BSR format includes delay information of buffered data in each LCH of the terminal device. For example, the second indication information may include a first bitmap, and a quantity of bits in the first bitmap is equal to a quantity of LCHs of the terminal device. Each bit in the first bitmap indicates whether the BSR format with delay information is used in one LCH. For example, if the quantity of LCHs of the terminal device is 4, the quantity of bits in the first bitmap is 4, and a value of the first bitmap is 1001, it indicates that the BSR format with delay information is used in a 1^{st} LCH and a 4^{th} LCH, and the BSR format with delay information is not used in a 2^{nd} LCH and a 3^{rd} LCH. When the 1^{st} LCH or the 4^{th} LCH has buffered data, the BSR reported by the terminal device further includes a delay field corresponding to the 1^{st} LCH or the 4^{th} LCH after a BS field corresponding to the 1^{st} LCH or the 4^{th} LCH. When the 2^{nd} LCH or the 3^{rd} LCH has buffered data, the BSR reported by the terminal device does not include the delay field corresponding to the 1^{st} LCH or the 4^{th} LCH.

For example, the first information may include service information of each of the plurality of LCHs of the terminal device, and the network device determines, based on the service information of each LCH, whether the BSR format with delay information is used in the LCH. For example, the BSR format with delay information is used in an LCH that performs a service having a high delay requirement, and the BSR format with delay information may not be used in an LCH that performs a service having a low delay requirement, so that a quantity of bits required for reporting the BSR can be reduced, and a waste of resources can be avoided. In this implementation, the network device may separately configure a BSR format corresponding to each of the plurality of LCHs of the terminal device, so that resources can be properly allocated, and the waste of resources can be avoided.

In a possible implementation, the method shown in FIG. 5 may further include step 504.

504: The terminal device sends a BSR. Correspondingly, the network device receives the BSR, where a format of the BSR is indicated by the first indication information.

For example, when the first indication information indicates one BSR format, the terminal device generates the BSR based on the BSR format. When the first indication information indicates a plurality of BSR formats, the terminal device may select one BSR format from the plurality of BSR formats based on the data amount or the delay information of the buffered data, to generate the BSR. For example, when the terminal device needs to transmit buffered data in an LCH, the terminal device determines a value of each field in the BSR format based on an identifier of the LCH having the buffered data, a data amount of the buffered data, and delay information of the buffered data, to generate the BSR.

For example, the terminal device may report the BSR by using a MAC control element (control element, CE) at the MAC layer.

For example, the network device may determine a scheduling priority of the terminal device based on the delay value indicated by the delay information. For example, a larger delay indicated by the delay information indicates a higher scheduling priority of the terminal device, and the network device preferentially schedules a corresponding transmission resource for the terminal device during resource scheduling.

In this embodiment of this application, the network device may configure the BSR format with delay information for the terminal device based on the service information of the terminal device, so that the BSR reported by the terminal device carries the delay information of the buffered data, the network device can implement delay-aware scheduling based on the delay information of the buffered data, and a delay requirement of the buffered data can be met. In this way, an amount of data that can be correctly received by the terminal device within a required delay is ensured, user experience can be improved, and a user capacity of a cell can be increased.

FIG. 7 is a diagram of interaction of another communication method according to an embodiment of this application. As shown in FIG. 7, the method includes but is not limited to the following steps.

701: A terminal device sends first information. Correspondingly, a network device receives the first information, where the first information includes service information.

It may be understood that, for specific descriptions of the first information, refer to related descriptions in FIG. 5. Details are not described herein again.

702: The network device determines, based on the first information, a quantity of bits occupied by delay information or a quantity of bits occupied by a BS field in a BSR format.

The quantity of bits occupied by the delay information in the BSR format is N, and a quantity of bits indicating a data amount of buffered data in the BSR format is M. In other words, the network device determines N or M based on the first information.

For example, the BSR format includes the BS field and a delay field, the BS field indicates the data amount of the buffered data, and the delay field is used to carry the delay information. The network device determines N or M in the BSR format based on the first information, to be specific, the network device determines, based on the first information, the quantity of bits occupied by the BS field or a quantity of bits occupied by the delay field. For example, the network device may determine, based on the quantity of bits occupied by the BS field, a mapping relationship between a value of the BS field and a data amount range, that is, re-perform uniform or non-uniform quantization on the data amount of the buffered data.

For example, a sum of N and M is a first value, or the quantity of bits occupied by the delay field and the quantity of bits occupied by the BS field are the first value. That is, the delay field and the BS field in the BSR format share bits of the first value. The network device may allocate N bits to the delay field, and allocate M bits to the BS field based on the first information. For example, the network device may determine a value range of the data amount of the buffered data of the terminal device based on a traffic characteristic of a service, and allocate, to the terminal device based on the value range of the data amount, the quantity of bits occupied by the delay field and the quantity of bits occupied by the BS field.

For example, the first value may be specified in a protocol or configured by the network device. For example, the first value may be 5 or 8, that is, the sum of N and M may be 5 or 8. For example, when the BSR format is a long BSR format, the first value may be 8. To be specific, in the long BSR format, the BS field and the delay field jointly occupy 8 bits, and an LCH ID occupies 8 bits, as shown in FIG. 8A. When the BSR format is a short BSR format, the first value may be 5. To be specific, in the short BSR format, the BS field and the delay field jointly occupy 5 bits, and the LCH ID occupies 3 bits, as shown in FIG. 8B.

For example, the network device may further quantize the data amount of the buffered data based on the first information, or adjust an existing data amount range.

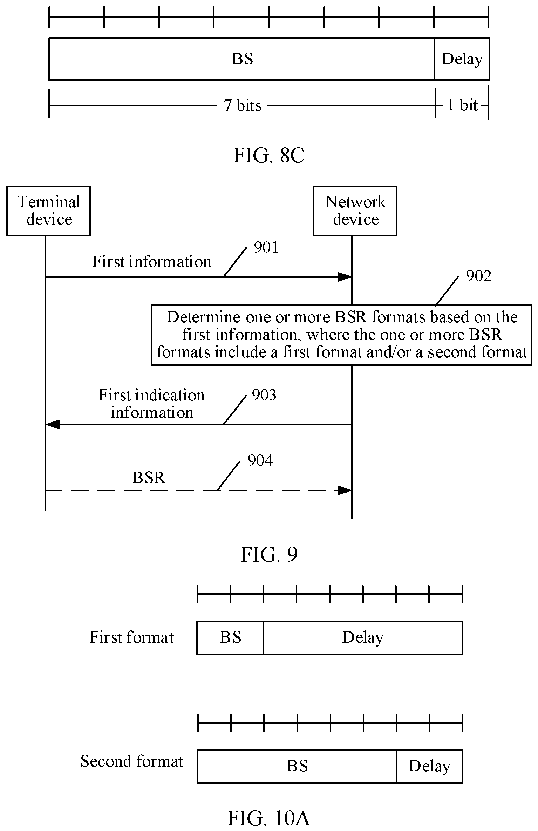

For example, in an AR service, based on an uplink AR video transmission benchmark test instance (case), an average bit rate is 10 Mbps, a frame rate is 60 FPS, a frame size complies with truncated Gaussian distribution (truncated Gaussian distribution), and a value range is [50%, 150%]. Therefore, a maximum value of buffered data in an LCH in which the AR service is located is 31250 bytes (bytes). Based on the mapping relationship between the index of the data amount range of the buffered data in the LCH and the data amount range of the LCH shown in Table 2, a data amount range of 0 to 31250 bytes may be indicated by using the index 0 to the index 128. Therefore, for the AR video service, 7 bits may be allocated to the BS field, and 1 bit may be allocated to the delay field. The BSR format may be shown in FIG. 8C. For example, when a value of the bit in the delay field is 0, it indicates that a delay of the buffered data is one uplink slot; or when a value of the bit is 1, it indicates that a delay of the buffered data is greater than one uplink slot. After allocating the 7 bits to the BS field, the network device may further adjust a data amount range whose index is 127 to 27638≤31250, or adjust a data amount range whose index is 127 to >27638.

703: The network device sends first indication information. Correspondingly, the terminal device receives the first indication information. The first indication information indicates N or M in one BSR format, to be specific, the first indication information indicates a quantity of bits occupied by a BS field or a quantity of bits occupied by a delay field in the BSR format.

It may be understood that a sum of N and M is a first value, and the first indication information may indicate N or M. The terminal device may separately determine, based on the first value and the first indication information, the quantity of bits occupied by the BS field and the quantity of bits occupied by the delay field. For example, the first indication information indicates N, and the terminal device may obtain M by subtracting N from the first value. For another example, the first indication information indicates M, and the terminal device may obtain N by subtracting M from the first value.

The BSR format includes the delay information, and may be referred to as a BSR format with delay information. In a possible implementation, the network device may further indicate, to the terminal device by using second indication information, whether to use the BSR format with delay information to report a BSR.

It may be understood that, for specific descriptions of the second indication information, refer to related descriptions in FIG. 5. Details are not described herein again.

When the terminal device needs to transmit buffered data in an LCH, the terminal device may report a BSR by using the BSR format indicated by the first indication information and the second indication information. For example, the terminal device determines, based on the first indication information, the quantity of bits occupied by the BS field and the quantity of bits occupied by the delay field in the BSR format with delay information, and determines, based on the second indication information, whether to use the BSR format with delay information to report the BSR.

When the second indication information indicates the terminal device to use the BSR format with delay information, the delay field and the BS field in the BSR reported by the terminal device respectively occupy N bits and M bits. When the second indication information indicates the terminal device not to use the BSR format with delay information, the BSR reported by the terminal device does not include the delay field, and the quantity of bits occupied by the BS field in the BSR is the first value.

In this embodiment of this application, the network device may determine, based on the first information, a quantity of bits occupied by delay information and a quantity of bits indicating a data amount of buffered data in one BSR format, and indicate, by using the first indication information, the bits occupied by the delay information or the quantity of bits indicating the data amount of the buffered data, so that a BSR format used by the terminal device to report a BSR can match a service of the terminal device. In this way, the terminal device can report the BSR more properly. In addition, in the BSR format, a quantity of bits of the first value indicates the delay information and the data amount of the buffered data, so that a quantity of bits required for reporting the BSR can be effectively reduced.

FIG. 9 is a diagram of interaction of still another communication method according to an embodiment of this application. As shown in FIG. 9, the method includes but is not limited to the following steps.

901: A terminal device sends first information. Correspondingly, a network device receives the first information, where the first information includes service information.

It may be understood that, for specific descriptions of the first information, refer to related descriptions in FIG. 5. Details are not described herein again.

902: The network device determines one or more BSR formats based on the first information, where the one or more BSR formats include a first format and/or a second format, a quantity of bits occupied by delay information in the first format and a quantity of bits occupied by delay information in the second format each are N, and a quantity of bits indicating a data amount of buffered data in the BSR format is M.

For example, in the first format, N is less than M, and in the second format, N is greater than M. Alternatively, N in the first format is less than N in the second format, and M in the first format is greater than M in the second format, to be specific, the quantity of bits occupied by the delay information in the first format is less than the quantity of bits occupied by the delay information in the second format, and a quantity of bits indicating a data amount of buffered data in the first format is greater than a quantity of bits indicating a data amount of buffered data in the second format.

In the first format, N is less than M, to be specific, in the first format, the quantity of bits occupied by the delay information is less than the quantity of bits indicating the data amount of the buffered data. Therefore, quantization precision of the buffered data in the first format is higher. In the second format, N is greater than M, to be specific, in the second format, the quantity of bits occupied by the delay information is greater than the quantity of bits indicating the data amount of the buffered data. Therefore, quantization precision of the delay information in the second format is higher.

For example, a sum of N and M in the first format is a first value, and a sum of N and M in the second format is the first value. To be specific, a sum of the quantity of bits occupied by the delay information and the quantity of bits indicating the data amount of the buffered data in the first format and a sum of the quantity of bits occupied by the delay information and the quantity of bits indicating the data amount of the buffered data in the second format each are the first value. The first value may be specified in a protocol or configured by the network device. For example, the first value may be 5 or 8.

For example, the delay information may be carried in a delay field, and the data amount of the buffered data may be indicated by a BS field. In other words, a quantity of bits occupied by the delay field is N, and a quantity of bits occupied by the BS field is M. A sum of the quantity of bits of the delay field and the quantity of bits of the BS field is the first value.

For example, when the first format and the second format each are a long BSR format, the first value is 8, in other words, the sum of the quantity of bits of the delay field and the quantity of bits of the BS field is 8, as shown in FIG. 10A. When N in the first format is less than N in the second format, some possible values of N and M in the first format and the second format may be shown in Table 3. (N, M) in the first format represents values of N and M in the first format, and (N, M) in the second format represents values of N and M in the second format. For example, (N, M) in the first format is (1, 7), that is, N is 1, and M is 7 in the first format. As shown in Table 3, when N is 1 and M is 7 in the first format, (N, M) in the second format may be any one of (2, 6), (3, 5), (4, 4), (5, 3), (6, 2), and (7, 1).

**Table 3**

| (N, M) in the first format | (N, M) in the second format |
|---|---|
| (1, 7) | (2, 6), (3, 5), (4, 4), (5, 3), (6, 2), or (7, 1) |
| (2, 6) | (3, 5), (4, 4), (5, 3), (6, 2), or (7, 1) |
| (3, 5) | (4, 4), (5, 3), (6, 2), or (7, 1) |
| (4, 4) | (5, 3), (6, 2), or (7, 1) |
| (5, 3) | (6, 2) or (7, 1) |
| (6, 2) | (7, 1) |

For example, when in the first format, N is less than M, and in the second format, N is greater than M, (N, M) in the first format may be any one of (1, 7), (2, 6), and (3, 5), and (N, M) in the second format may be any one of (5, 3), (6, 2), and (7, 1).

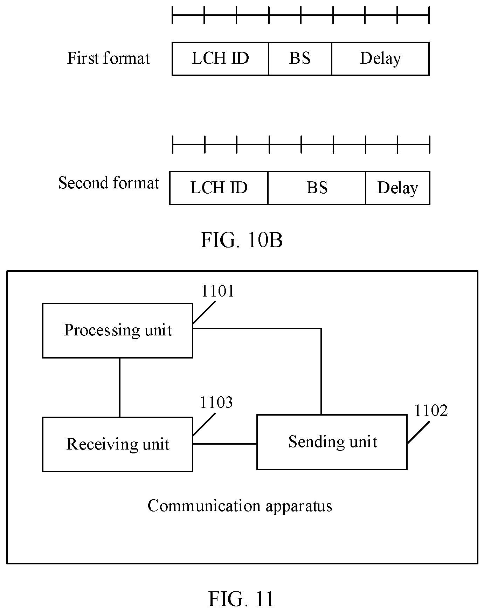

For example, when the first format and the second format each are a short BSR format, the first value may be 5. In the first format and the second format, an LCH ID field occupies 3 bits, and the sum of the quantity of bits of the delay field and the quantity of bits of the BS field is 5, as shown in FIG. 10B. When N in the first format is less than N in the second format, some possible values of N and M in the first format and the second format may be shown in Table 4. That is, when N is 1 and M is 4 in the first format, N and M in the second format may be one of (2, 3), (3, 2), and (4, 1).

**Table 4**

| (N, M) in the first format | (N, M) in the second format |
|---|---|
| (1, 4) | (2, 3), (3, 2), or (4, 1) |
| (2, 3) | (3, 2) or (4, 1) |
| (3, 2) | (4, 1) |

For example, when in the first format, N is less than M, and in the second format, N is greater than M, (N, M) in the first format may be (1, 4) or (2, 3), and (N, M) in the second format may be (3, 2) or (4, 1).

In a possible implementation, the network device may separately determine N or M in the first format and the second format based on the first information. For example, the network device determines, based on the service information of the terminal device, a data amount range of the buffered data of the terminal device or an allowed delay range of the buffered data as the quantity of bits occupied by the BS field and the quantity of bits occupied by the delay field that are allocated to the first format and the second format. After determining N and M in the first format and the second format, the network device may configure the first format and the second format for the terminal device by using first indication information.

For example, after determining N and M in the first format and the second format, the network device may further determine, based on the first information, mapping relationships between values (that is, indexes of data amount ranges) of M bits and the data amount ranges in the first format and the second format, and determine mapping relationships between values of N bits and delay value ranges in the first format and the second format.

In this implementation, the network device may configure, for the terminal device, a plurality of BSR formats that match the service information of the terminal device, so that the terminal device can select an appropriate BSR format from the plurality of BSR formats to report a BSR in a service process. In this way, the terminal device can report the BSR more properly.

In another possible implementation, the network device may determine, from the first format and the second format based on the first information, one BSR format as a BSR format used by the terminal device to report a BSR. For example, the network device may determine, based on the service information of the terminal device, the data amount range of the buffered data of the terminal device, a delay requirement, or a service type of the terminal device.

For example, when the service type of the terminal device is a service type having a high delay requirement, the network device may determine the second format as the BSR format used by the terminal device to report the BSR, and indicate the second format to the terminal device by using the first indication information.

For another example, when the data amount range of the buffered data of the terminal device is large, and a delay requirement of the buffered data is not high, the network device may determine the first format as the BSR format used by the terminal device to report the BSR, and indicate the first format to the terminal device by using the first indication information.

In this implementation, the network device configures a corresponding BSR format for the terminal device based on the service information of the terminal device, so that the terminal device can report the BSR more properly.

903: The network device sends the first indication information. Correspondingly, the terminal device receives the first indication information, where the first indication information indicates the first format and/or the second format. To be specific, the first indication information indicates the first format, or the first indication information indicates the second format, or the first indication information indicates the first format and the second format.

In some possible implementations, the method shown in FIG. 9 further includes step 904.

904: The terminal device sends a BSR. Correspondingly, the network device receives the BSR.

In a possible implementation, the first indication information indicates the first format, or the first indication information indicates the second format. When the terminal device needs to transmit buffered data, the terminal device may generate the BSR based on the BSR format indicated by the first indication information, and report the BSR to the network device, so that the network device can perform scheduling based on delay information carried in the BSR.

For example, the network device may preconfigure the first format and the second format for the terminal device, and indicate, by using the first indication information, the terminal device to use one BSR format in the first format and the second format to report the BSR. For example, the first indication information may include a B S-delay-priority (BS-delay-priority) field. When a value indicated by the BS-delay-priority field is 1 (or true), the first indication information indicates the terminal device to use the first format to report the BSR. When a value indicated by the BS-delay-priority field is 0 (or false), the first indication information indicates the terminal device to use the second format to report the BSR.

In another possible implementation, the first indication information indicates the first format and the second format. When the terminal device needs to transmit buffered data, the terminal device may determine a format of the BSR from the first format and the second format based on a data amount or delay information of the buffered data.

For example, when the data amount of the buffered data is greater than a first threshold, the format of the BSR is the second format; when the data amount of the buffered data is less than or equal to a first threshold, the format of the BSR is the first format; when a delay indicated by the delay information is greater than a second threshold, the format of the BSR is the second format; or when a delay indicated by the delay information is less than or equal to a second threshold, the format of the BSR is the first format.

For example, the first threshold and the second threshold may be specified in a protocol or configured by the network device. For example, the first threshold and the second threshold may be determined by the network device based on the service information of the terminal device.

For example, the first threshold is related to M in the first format. For example, the first threshold may be a maximum buffered data amount that can be indicated by M bits in the mapping relationship between the index of the data amount range and the data amount range. For example, when M is 6, in other words, the quantity of bits occupied by the BS field is 6, based on the mapping relationship between the index of the data amount range and the data amount range in Table 2, a maximum range that can be indicated by the 6 bits is 526 bytes, and the first threshold may be 526 bytes. When the data amount of the buffered data is less than or equal to 526 bytes, the terminal device determines the format of the BSR as the first format. When the data amount of the buffered data is greater than 526 bytes, the terminal device determines the format of the BSR as the second format.

It may be understood that, when the data amount of the buffered data is large, for example, the data amount of the buffered data is greater than the first threshold, longer time is required for the terminal device to transmit the buffered data. To avoid that the delay of the buffered data exceeds a PDB, the delay of the buffered data needs to be reported in a refined manner. Therefore, when the data amount of the buffered data is greater than the first threshold, the terminal device may report the BSR in the second format, and may report the delay of the buffered data in a refined manner by using a BSR in the second format. Alternatively, when the delay of the buffered data is large, for example, the delay of the buffered data is greater than the second threshold, to avoid that the delay of the buffered data exceeds a PDB, a BSR in the second format may be used to report the delay of the buffered data in a refined manner. Alternatively, when the data amount of the buffered data is less than or equal to the first threshold, or the delay of the buffered data is less than or equal to the second threshold, the terminal device may report the data amount of the buffered data in a refined manner by using a BSR in the first format, so that the network device can perform refined scheduling based on the BSR.

In this implementation, after determining the format of the BSR, the terminal device sends third indication information to the network device, where the third indication information indicates the format of the BSR.

In this embodiment of this application, the network device may configure, for the terminal device, a plurality of BSR formats (for example, the first format and the second format) that match the service information of the terminal device, so that the terminal device can select, based on the data amount or the delay value of the buffered data, an appropriate BSR format from the plurality of BSR formats to report a BSR in a service process. In this way, the terminal device can report the BSR more properly.

A communication apparatus provided in embodiments of this application is described below.

In this application, the communication apparatus is divided into functional modules based on the foregoing method embodiments. For example, the communication apparatus may be divided into functional modules corresponding functions, or two or more functions may be integrated into one processing module. The integrated module may be implemented in a form of hardware, or may be implemented in a form of a software functional module. It should be noted that, in this application, module division is an example, and is merely a logical function division. In an actual implementation, another division manner may be used. The following describes in detail communication apparatuses in embodiments of this application with reference to FIG. 11 to FIG. 13.

FIG. 11 is a diagram of a structure of a communication apparatus according to an embodiment of this application. As shown in FIG. 11, the communication apparatus includes a processing unit 1101, a sending unit 1102, and a receiving unit 1103.

In some embodiments of this application, the communication apparatus may be the network device shown above. To be specific, the communication apparatus shown in FIG. 11 may be configured to perform steps, functions, or the like performed by the network device in the foregoing method embodiments. For example, the communication apparatus may be a beamformed transmit device, a chip, or the like. This is not limited in this embodiment of this application.

The receiving unit 1103 is configured to receive first information.

The processing unit 1101 is configured to determine one or more BSR formats.

The sending unit 1102 is configured to send first indication information.

Optionally, the receiving unit 1103 is further configured to receive a BSR.

It may be understood that for specific descriptions of the first information, the one or more BSR formats, the first indication information, the BSR, and the like, refer to the foregoing method embodiments, such as related descriptions of the methods shown in FIG. 5, FIG. 7, and FIG. 9. Details are not described herein again.

It may be understood that specific descriptions of the processing unit, the sending unit, and the receiving unit shown in this embodiment of this application are merely examples. For specific functions of the processing unit, the sending unit, and the receiving unit, steps performed by the processing unit, the sending unit, and the receiving unit, or the like, refer to the foregoing method embodiments. Details are not described herein again.

Still refer to FIG. 11. In some other embodiments of this application, the communication apparatus may be the terminal device shown above. To be specific, the communication apparatus shown in FIG. 11 may be configured to perform steps, functions, or the like performed by the terminal device in the foregoing method embodiments. For example, the communication apparatus may be a beamformed receive device, a chip, or the like. This is not limited in this embodiment of this application.

The sending unit 1102 is configured to send first information.

The receiving unit 1103 is configured to receive first indication information.

Optionally, the sending unit 1102 is configured to send a BSR.

It may be understood that for specific descriptions of the first information, the first indication information, the BSR, and the like, refer to the foregoing method embodiments, such as related descriptions of the methods shown in FIG. 5, FIG. 7, and FIG. 9. Details are not described herein again.

It may be understood that specific descriptions of the receiving unit, the sending unit, and the processing unit shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

The foregoing describes the network device and the terminal device in embodiments of this application. The following describes possible product forms of the network device and the terminal device. It should be understood that a product in any form that has a function of the network device in FIG. 11 or a product in any form that has a function of the terminal device in FIG. 11 is within the protection scope of embodiments of this application. It should be further understood that the following descriptions are merely examples, and product forms of the network device and the terminal device in embodiments of this application are not limited thereto.

In the communication apparatus shown in FIG. 11, the processing unit 1101 may be one or more processors, the sending unit 1102 may be a transmitter, the receiving unit 1103 may be a receiver, and the sending unit and the receiving unit are integrated into one component, for example, a transceiver. Alternatively, the processing unit 1101 may be one or more processors (or the processing unit 1101 may be one or more logic circuits), the sending unit 1102 may be an output interface, the receiving unit 1103 may be an input interface, and the input interface and the output interface may be integrated into one unit, for example, an input/output interface. Details are described below.

In a possible implementation, in the communication apparatus shown in FIG. 11, the processing unit 1101 may be one or more processors, and the sending unit 1102 and the receiving unit 1103 are integrated into one component, for example, a transceiver. In embodiments of this application, the processor and the transceiver may be coupled, or the like. A manner of connection between the processor and the transceiver is not limited in embodiments of this application.

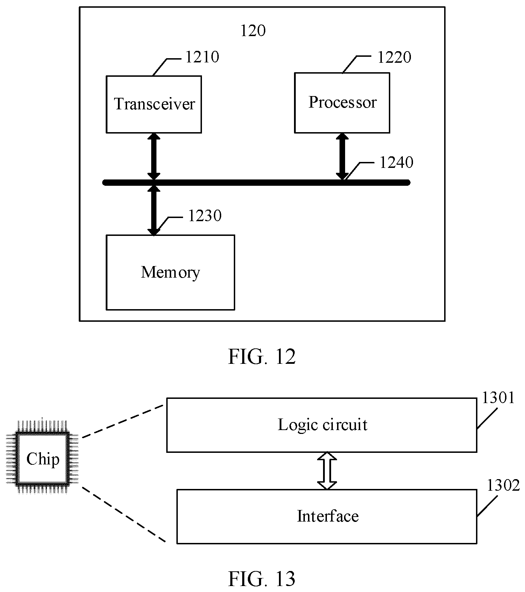

As shown in FIG. 12, a communication apparatus 120 includes one or more processors 1220 and a transceiver 1210.

For example, when the communication apparatus is configured to perform the steps, the methods, or the functions performed by the network device, the processor 1220 is configured to determine one or more BSR formats. The transceiver 1210 is configured to: receive first information and send first indication information. Optionally, the transceiver 1210 is further configured to receive a BSR.

For example, when the communication apparatus is configured to perform the steps, the methods, or the functions performed by the terminal device, the transceiver 1210 is configured to: send first information and receive first indication information. Optionally, the transceiver 1210 is further configured to send a BSR.

It may be understood that for specific descriptions of the first information, the first indication information, the one or more BSR formats, the BSR, and the like, refer to the foregoing method embodiments, such as related descriptions of the methods shown in FIG. 5, FIG. 7, and FIG. 9. Details are not described herein again.

It may be understood that for specific descriptions of the processor and the transceiver, further refer to the descriptions of the processing unit, the sending unit, and the receiving unit shown in FIG. 11. Details are not described herein again.

In various implementations of the communication apparatus shown in FIG. 12, the transceiver may include a receiver and a transmitter. The receiver is configured to perform a receiving function (or operation) and the transmitter is configured to perform a transmitting function (or operation). The transceiver is configured to communicate with another device/apparatus through a transmission medium.

Optionally, the communication apparatus 120 may further include one or more memories 1230, configured to store program instructions and/or data. The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. The processor 1220 may cooperate with the memory 1230. The processor 1220 may execute the program instructions stored in the memory 1230. Optionally, at least one of the one or more memories may be included in the processor.

A specific connection medium between the transceiver 1210, the processor 1220, and the memory 1230 is not limited in this embodiment of this application. In this embodiment of this application, the memory 1230, the processor 1220, and the transceiver 1210 are connected through a bus 1240 in FIG. 12. The bus is represented by a bold line in FIG. 12. A manner of connection between other components is merely an example for description, and is not limited thereto. The bus may be classified into an address bus, a data bus, a control bus, and the like. For ease of representation, only one bold line is used for representation in FIG. 12, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and can implement or execute the methods, the steps, and the logical block diagrams disclosed in embodiments of this application. The general-purpose processor may be a microprocessor or any conventional processor or the like. The steps of the methods disclosed with reference to embodiments of this application may be directly performed and completed by a hardware processor, or may be performed and completed by using a combination of hardware and software modules in the processor, or the like.

In this embodiment of this application, the memory may include but is not limited to a non-volatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be configured to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or the data.

The processor 1220 is mainly configured to process a communication protocol and communication data, control the entire communication apparatus, execute a software program, and process data of the software program. The memory 1230 is mainly configured to store the software program and the data. The transceiver 1210 may include a control circuit and an antenna. The control circuit is mainly configured to: convert a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1220 may read the software program in the memory 1230, interpret and execute instructions of the software program, and process data of the software program. When data needs to be sent wirelessly, the processor 1220 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When the data is sent to the communication apparatus, the radio frequency circuit receives the radio frequency signal through the antenna, converts the radio frequency signal into a baseband signal, and outputs the baseband signal to the processor 1220. The processor 1220 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further have more components and the like than those shown in FIG. 12. This is not limited in this embodiment of this application. The methods performed by the processor and the transceiver are merely examples. For specific steps performed by the processor and the transceiver, refer to the methods described above.

In another possible implementation, in the communication apparatus shown in FIG. 11, the processing unit 1101 may be one or more logic circuits, the sending unit 1102 may be an output interface, the receiving unit 1103 may be an input interface, and the input interface and the output interface may be integrated into one unit, for example, an input/output interface. The input/output interface is also referred to as a communication interface, an interface circuit, an interface, or the like. As shown in FIG. 13, a communication apparatus shown in FIG. 13 includes a logic circuit 1301 and an interface 1302. To be specific, the processing unit 1101 may be implemented through the logic circuit 1301, and the sending unit 1102 and the receiving unit 1103 may be implemented through the interface 1302. The logic circuit 1301 may be a chip, a processing circuit, an integrated circuit, a system on chip (system on chip, SoC), or the like. The interface 1302 may be a communication interface, an input/output interface, a pin, or the like. For example, FIG. 13 is an example in which the communication apparatus is a chip. The chip includes the logic circuit 1301 and the interface 1302.

In this embodiment of this application, the logic circuit and the interface may alternatively be coupled to each other. A specific manner of connection between the logic circuit and the interface is not limited in this embodiment of this application.

For example, when the communication apparatus is configured to perform the methods, the functions, or the steps performed by the network device, the logic circuit 1301 is configured to determine one or more BSR formats. The interface 1302 is configured to: input first information and output first indication information. Optionally, the interface 1302 is further configured to input a BSR.

For example, when the communication apparatus is configured to perform the methods, the functions, or the steps performed by the terminal device, the interface 1302 is configured to: output first information and input first indication information. Optionally, the interface 1302 is further configured to output a BSR.

It may be understood that the communication apparatus shown in this embodiment of this application may implement the methods provided in embodiments of this application in a form of hardware, or may implement the methods provided in embodiments of this application in a form of software. This is not limited in this embodiment of this application.

For specific descriptions of the first information, the first indication information, the one or more BSR formats, the BSR, and the like, refer to the foregoing method embodiments, such as related descriptions of the methods shown in FIG. 5, FIG. 7, and FIG. 9. Details are not described herein again.

For specific implementations of embodiments shown in FIG. 13, further refer to the foregoing embodiments. Details are not described herein again.

An embodiment of this application further provides a communication system. The communication system includes a network device and a terminal device. The network device and the terminal device may be configured to perform the method in any one of the foregoing embodiments (as shown in FIG. 5, FIG. 7, FIG. 9, and the like).

In addition, this application further provides a computer program. The computer program is used to implement an operation and/or processing performed by the network device in the method provided in this application.

This application further provides a computer program. The computer program is used to implement an operation and/or processing performed by the terminal device in the method provided in this application.

This application further provides a computer-readable storage medium. The computer-readable storage medium stores computer code. When the computer code is run on a computer, the computer is enabled to perform an operation and/or processing performed by the network device in the method provided in this application.

This application further provides a computer-readable storage medium. The computer-readable storage medium stores computer code. When the computer code is run on a computer, the computer is enabled to perform an operation and/or processing performed by the terminal device in the method provided in this application.

This application further provides a computer program product. The computer program product includes computer code or a computer program. When the computer code or the computer program runs on a computer, an operation and/or processing performed by the network device in the method provided in this application are/is performed.

This application further provides a computer program product. The computer program product includes computer code or a computer program. When the computer code or the computer program runs on a computer, an operation and/or processing performed by the terminal device in the method provided in this application are/is performed.

An embodiment of this application further provides a chip or a chip system, including a processor, configured to perform the method in any one of the foregoing embodiments (as shown in FIG. 5, FIG. 7, FIG. 9, and the like).

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a network device and comprises:
receiving first information, wherein the first information comprises service information;
determining one or more buffer status report BSR formats based on the first information, wherein a quantity of bits occupied by delay information in the BSR format is N, a quantity of bits indicating a data amount of buffered data in the BSR format is M, the delay information is delay information of the buffered data, and both N and M are positive integers; and
sending first indication information, wherein the first indication information indicates the one or more BSR formats.

2. The method according to claim 1, wherein the delay information comprises a delay of a first moment relative to a second moment, the first moment is a moment at which the buffered data arrives at any one of the following: a medium access control MAC layer, a service data adaptation protocol SDAP layer, a packet data convergence protocol PDCP layer, and a radio link control RLC layer, and the second moment is a start moment of a slot in which a BSR in the BSR format is located.

3. The method according to claim 1 or 2, wherein the one or more BSR formats comprise a first format and/or a second format, in the first format, N is less than M, and in the second format, N is greater than M.

4. The method according to claim 3, wherein the one or more BSR formats comprise the first format and the second format, and the method further comprises:
receiving a BSR, wherein a format of the BSR is determined based on the first indication information, the data amount of the buffered data, or the delay information.

5. The method according to claim 4, wherein when the data amount of the buffered data is greater than a first threshold, the format of the BSR is the second format;
when the buffer amount of the buffered data is less than or equal to a first threshold, the format of the BSR is the first format;
when the delay indicated by the delay information is greater than a second threshold, the format of the BSR is the second format; or
when the delay indicated by the delay information is less than or equal to a second threshold, the format of the BSR is the first format.

6. The method according to claim 1 or 2, wherein the first indication information indicates N or M in one BSR format, and determining the one or more buffer status report BSR formats based on the first information comprises:
determining N or M based on the first information.

7. The method according to any one of claims 1 to 6, wherein a sum of N and M is a first value.

8. The method according to claim 1 or 2, wherein the delay information in the BSR format indicates at least one delay, and one of the at least one delay indicates a delay of buffered data in one logical channel LCH.

9. The method according to claim 8, wherein a quantity of bits occupied by the delay is 8.

10. The method according to any one of claims 2 to 9, wherein a unit of the delay comprises any one of the following: a slot, an uplink slot, and a millisecond.

11. The method according to any one of claims 1 to 10, wherein the service information comprises at least one of the following: a bit rate, a frame rate, a frame size average value, and a burst length of service data.

12. A communication method, wherein the method is applied to a terminal device and comprises:
sending first information, wherein the first information comprises service information; and
receiving first indication information, wherein the first indication information indicates one or more buffer status report BSR formats, the BSR format is determined based on the first information, a quantity of bits occupied by delay information in the BSR format is N, a quantity of bits indicating a data amount of buffered data in the BSR format is M, the delay information is delay information of the buffered data, and both N and M are positive integers.

13. The method according to claim 12, wherein the delay information comprises a delay of a first moment relative to a second moment, the first moment is a moment at which the buffered data arrives at any one of the following: a medium access control MAC layer, a service data adaptation protocol SDAP layer, a packet data convergence protocol PDCP layer, and a radio link control RLC layer, and the second moment is a start moment of a slot in which a BSR in the BSR format is located.

14. The method according to claim 12 or 13, wherein the one or more BSR formats comprise a first format and/or a second format, in the first format, N is less than M, and in the second format, N is greater than M.

15. The method according to claim 14, wherein the one or more BSR formats comprise the first format and the second format, and the method further comprises:
sending a BSR, wherein a format of the BSR is determined based on the first indication information, the data amount of the buffered data, or the delay information.

16. The method according to claim 15, wherein when the data amount of the buffered data is greater than a first threshold, the format of the BSR is the second format;
when the data amount of the buffered data is less than or equal to a first threshold, the format of the BSR is the first format;
when the delay indicated by the delay information is greater than a second threshold, the format of the BSR is the second format; or
when the delay indicated by the delay information is less than or equal to a second threshold, the format of the BSR is the first format.

17. The method according to claim 12 or 13, wherein the first indication information indicates N or M in one BSR format.

18. The method according to any one of claims 12 to 17, wherein a sum of N and M is a first value.

19. The method according to claim 12 or 13, wherein the delay information in the BSR format indicates at least one delay, and one of the at least one delay indicates a delay of buffered data in one logical channel LCH.

20. The method according to claim 19, wherein a quantity of bits occupied by the delay is 8.

21. The method according to any one of claims 13 to 20, wherein a unit of the delay comprises any one of the following: a slot, an uplink slot, and a millisecond.

22. The method according to any one of claims 12 to 21, wherein the service information comprises at least one of the following: a bit rate, a frame rate, a frame size average value, and a burst length of service data.

23. A communication apparatus, comprising a unit configured to perform the method according to any one of claims 1 to 11, or comprising a unit configured to perform the method according to any one of claims 12 to 22.

24. A communication apparatus, comprising a processor and a memory, wherein
the memory is configured to store computer-executable instructions; and
the processor is configured to execute the computer-executable instructions, so that the method according to any one of claims 1 to 11 is performed, or the method according to any one of claims 12 to 22 is performed.

25. A computer-readable storage medium, wherein the computer-readable storage medium is configured to store a computer program, and when the computer program is executed, the method according to any one of claims 1 to 11 is performed, or the method according to any one of claims 12 to 22 is performed.

26. A communication system, comprising a network device and a terminal device, wherein the network device is configured to perform the method according to any one of claims 1 to 11, and the terminal device is configured to perform the method according to any one of claims 12 to 22.
